# EUROPEAN PATENT APPLICATION

(11) **EP 4 523 574 A1**
(43) Date of publication of application: **19.03.2025**
(21) Application number: 23803753.5
(22) Date of filing: 03.05.2023
(51) Int. Cl.: A47J 19/06, A47J 19/02, A47J 43/07

(54) **JUICE EXTRACTOR**

(30) Priority: 11.05.2022 KR 20220001160 U
(71) Applicant: Hurom Co., Ltd., Gimhae-si, Gyeongsangnam-do 50969 (KR)
(72) Inventor: LEE, Cha Woo, Changwon-si, Gyeongsangnam-do 51142 (KR)
(74) Representative: dompatent von Kreisler Selting Werner - Partnerschaft von Patent- und Rechtsanwälten mbB
(86) International application number: PCT/KR2023/006042
(87) International publication number: WO 2023/219330

(57) **Abstract**

The present invention relates to a juice extractor comprising a cutting portion which preliminarily cuts ingredients to be extracted in a hopper on a screw through rotation, and in the juice extractor according to the present invention, a discharge portion which is formed in the bottom surface of the hopper and transports the cut ingredients to be extracted to the lower portion comprises: a through hole penetrating therethrough in the up-and-down direction and formed in the circumferential direction; and a stepped portion which is recessed downward from the bottom inner surface in the outer side of the through-hole so as to form a stepped protrusion in the rotating direction of the cutting portion.

## Description

### [Technical Field]

The present invention relates to a juice extractor, and more particularly to a juice extractor capable of squeezing and crushing vegetables, fruits, and the like to produce juices.

### [Background Art]

More people are directly making their own green juice or juices at home for health reasons, and to this end, many devices that enable simple juice extraction of vegetables or fruits at home have been disclosed.

Conventional juice extractors produce juices by centrifugation by introducing ingredients through an inlet and crushing the ingredients using a high-speed rotating blade. In these juice extractors, however, the unique flavor and nutrients of the ingredients may be destroyed during a high-speed crushing process, it is difficult to produce green juice from stem vegetables or leaf vegetables, it is difficult to produce juices from fruits having high viscosity, such as kiwi or strawberry, and it is impossible to produce soy milk from soybeans.

In order to solve these problems, Korean Registered Patent No. 10-0793852 discloses a method of squeezing and crushing ingredients between a mesh drum and a screw rotating at a low speed, wherein soy milk is produced using the principle of grinding and squeezing soybeans with a millstone, and juices are produced by grating and squeezing fruits having high viscosity, such as tomato, kiwi, and strawberry, with a grater, whereby the problems of the conventional juice extractors are solved.

Even in this case, however, depending on the size of the screw and the size of an inlet manufactured such that ingredients of an appropriate size can be inserted through the inlet according to the size of the screw, it is necessary to pre-cut the ingredients before introducing the ingredients through the inlet, which is troublesome.

Accordingly, a juice extractor is proposed which includes a hopper coupled to an upper part of a juice extraction drum that receives a screw therein to receive a juice extraction ingredient, wherein a large juice extraction ingredient, such as whole fruits, is pre-cut by a cutting unit that is rotated in the hopper before the juice extraction ingredient is introduced into the juice extraction drum. At this time, the juice extraction ingredient pre-cut in the hopper is transferred to the juice extraction drum through an outlet formed in a bottom surface of the hopper for juice extraction.

When the diameter of the screw increases, torque generated by a motor decreases, and if the amount of juice extraction ingredient introduced from the hopper is large, the screw may be overloaded, whereby juice extraction efficiency may be sharply reduced. Therefore, it is necessary to downwardly move an appropriate amount of juice extraction ingredient that can be processed by the screw through the outlet.

Accordingly, it is conceivable that reducing the size of the outlet formed in the bottom surface of the hopper can reduce the amount of juice extraction ingredient introduced from the hopper, but there is a problem that, if the size of the outlet is reduced, the juice extraction ingredient is not well introduced downward. That is, the amount of juice extraction ingredient supplied to the juice extraction drum may not be easily adjusted by changing only the size of the outlet.

The present invention proposes an outlet structure and a screw structure that enable an appropriate amount of juice extraction ingredient to be well introduced downward even if the size of the outlet is reduced.

### <Prior Art Document>

Korean Registered Patent No. 10-0793852

### [Disclosure]

### [Technical Problem]

The present invention has been made in view of the above problems, and it is an object of the present invention to provide a juice extractor including a hopper coupled to an upper part of a juice extraction drum to pre-cut a juice extraction ingredient having a large size, such as whole fruits, through a cutting unit that is rotated therein and to introduce the pre-cut juice extraction ingredient downward, wherein an appropriate amount of juice extraction ingredient is well introduced downward even if the size of a through-hole is small by changing the shape of an outlet formed in a bottom surface of the hopper.

Objects of the present invention are not limited to the aforementioned object, and other unmentioned objects of the present invention will be clearly understood by those skilled in the art from the following description.

### [Technical Solution]

The above object of the present invention may be accomplished by a juice extractor including a hopper having an inner space configured to receive a juice extraction ingredient and a cutting unit disposed in the hopper, the cutting unit being configured to pre-cut the juice extraction ingredient and to transfer the pre-cut juice extraction ingredient to a screw under the hopper by rotation, wherein the screw includes a touch portion protruding upward above a screw body, the touch portion being configured to touch the juice extraction ingredient caught in a through-hole formed in a bottom surface of the hopper.

An upper end of the touch portion may be located under a lower end of the through-hole formed in the bottom surface of the hopper.

The screw may further include an upper end screw blade having a screw thread extending to an upper end of the screw body to form a horizontal blade, and an upper end of the touch portion may be located above the upper end screw blade.

An inclined surface facing toward the through-hole in a radial direction may be formed on an outer bottom surface of the hopper, and an inclined surface corresponding to the inclined surface may be formed on an inner surface of an upper end part of the touch portion.

An upper end surface of the touching portion may be located in the center of the through-hole in the radial direction.

The touch portion may be formed in plural.

In addition, the above object of the present invention may be accomplished by a screw for juice extractors, wherein the screw includes a touch portion protruding upward above a screw body, the touch portion being configured to touch a juice extraction ingredient caught in an inlet configured to allow the juice extraction ingredient to be introduced therethrough above the screw.

### [Advantageous Effects]

As is apparent from the above description, a juice extractor according to the present invention has the advantage that, even if the size of a through-hole formed in a bottom surface of a hopper is reduced, an appropriate amount of pre-cut juice extraction ingredient may be smoothly transferred downward, thereby improving juice extraction efficiency.

The juice extractor according to the present invention has the advantage that, since the juice extraction ingredient is cut and agitated in the hopper and is provided to a juice extraction drum, there is no need to pre-cut the juice extraction ingredient, whereby user convenience may be improved.

In addition, the juice extractor according to the present invention has the advantage that, since a cutting unit is rotated in a state of being supported only by a lower end surface of the hopper, it is possible to secure an open space above the cutting unit in the hopper, whereby the size of the juice extraction ingredient introduced into the hopper may be further increased.

### [Description of Drawings]

FIG. 1 is a perspective view of a juice extraction unit according to an embodiment of the present invention.
FIG. 2 is a sectional perspective view showing the interior of FIG. 1.
FIG. 3 is an exploded perspective view of the juice extraction unit.
FIG. 4 is a cut-away perspective view of a juice extraction drum.
FIG. 5 is a plan view of the juice extraction drum.
FIG. 6 is a perspective view of a screw.
FIG. 7 is a side view of the screw.
FIG. 8 is an exploded perspective view of the screw.
FIG. 9 is a view showing a touch portion and a through-hole of the screw.
FIG. 10 is a cut-away perspective view showing the interior of a hopper.
FIG. 11 is a perspective view showing an inner surface of the bottom of the hopper.
FIG. 12 is a plan view showing the inner surface of the bottom of the hopper.
FIG. 13 is a perspective view showing an outer surface of the bottom of the hopper.
FIG. 14 is a bottom view showing the outer surface of the bottom of the hopper.
FIG. 15 is a perspective view of a cutting unit.
FIGs. 16 and 17 are side views of the cutting unit of FIG. 15.
FIG. 18 is a perspective view showing a lower surface of the cutting unit.

### [Best Mode]

Specific details of embodiments are contained in the detailed description and the drawings.

The advantages and features of the present invention and a method of achieving the same will become apparent with reference to embodiments described hereinafter in detail with the accompanying drawings. However, the present invention is not limited to embodiments disclosed hereinafter but may be embodied in many different forms, the embodiments are provided merely to make the disclosure of the present invention complete and to fully inform a person having ordinary skill in the art to which the present invention pertains of the scope of the invention, and the present invention is defined only by the scope of the claims. Throughout the specification, the same reference numerals refer to the same components.

Hereinafter, the present invention will be described with reference to the drawings illustrating embodiments of a juice extractor according to the present invention.

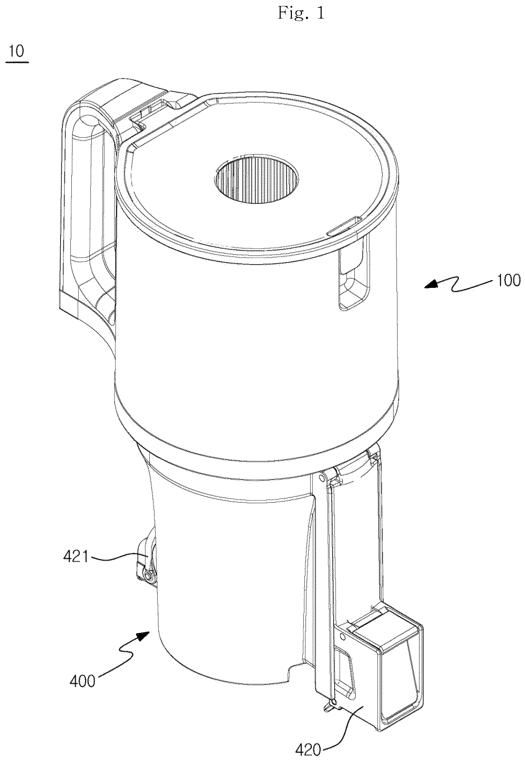

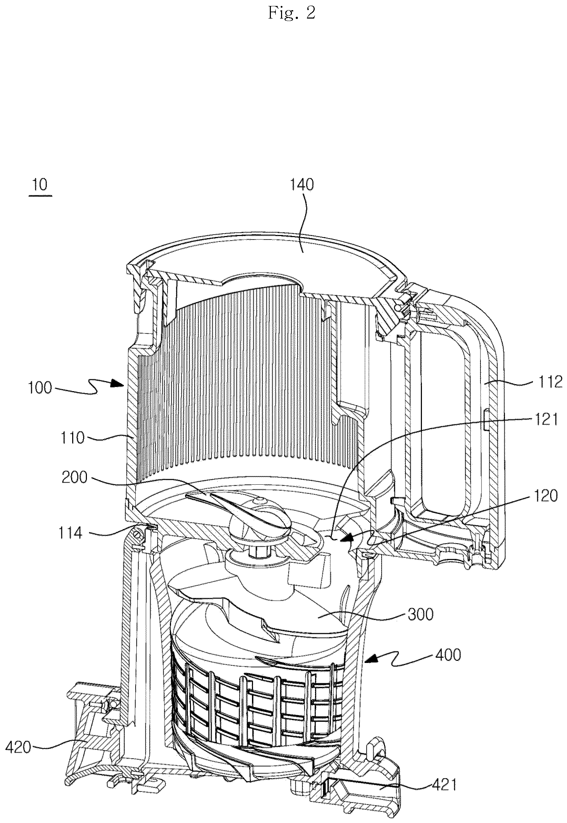

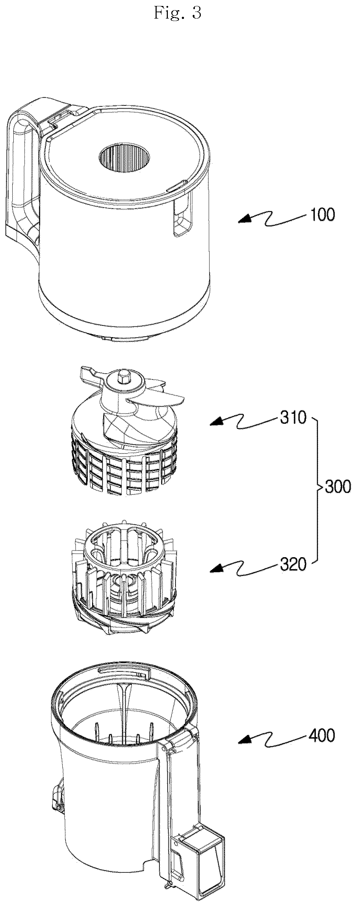

FIG. 1 is a perspective view of a juice extraction unit according to an embodiment of the present invention, FIG. 2 is a sectional perspective view showing the interior of FIG. 1, and FIG. 3 is an exploded perspective view of the juice extraction unit.

The juice extractor according to the embodiment of the present invention may mainly include a main body (not shown) and a juice extraction unit 10.

The main body fixes the juice extraction unit 10 in a state of being seated thereon, and receives power from the outside to provide driving force necessary to rotate a motor disposed therein in order to rotate a screw 300 constituting the juice extraction unit 10. A driving shaft, to which the screw 300 is fastened such that power is transmitted to the screw, may be formed at an upper surface of the main body so as to protrude therefrom. The main body is a basic configuration of a conventional juice extractor, and a detailed description thereof will be omitted.

As shown, the juice extraction unit 10 may include a hopper 100, a juice extraction drum 400, and a screw 300.

The juice extraction unit 10 may be assembled by fastening the hopper 100 to an upper part of the juice extraction drum 400 in the state in which the screw 300 is mounted in the juice extraction drum 400.

The hopper 100 has an internal space into which a juice extraction ingredient having a large size, such as whole fruit, can be introduced. A rotatable cutting unit 200 may be disposed in the hopper 100 to pre-cut the introduced juice extraction ingredient. The juice extraction ingredient pre-cut in the hopper 100 may be transferred into the juice extraction drum 400 located under the hopper 100 through an outlet 120 including a through-hole 121 formed in a bottom surface of the hopper 100. The pre-cut juice extraction ingredient transferred into the juice extraction drum 400 may be crushed and squeezed by the screw 300 rotated by power from the main body, whereby juice may be produced.

The produced juice and the remaining pomace may be separated and discharged through a juice outlet 420 and a pomace outlet 421, respectively. At this time, a mesh drum (not shown) having fine mesh holes formed so as to separate the juice and the pomace from each other may be disposed between the juice extraction drum 400 and the screw 300. The juice produced by squeezing may be transferred to the outside of the mesh drum through the mesh holes, whereby the juice may be separated from the pomace in the mesh drum. However, in the present embodiment, the juice produced by squeezing may be transferred into the screw 300 without disposition of a separate mesh drum and may be separated into pomace outside the screw 300 and juice in the screw 300. A detailed structure of the screw 300 will be described later.

Hereinafter, each component constituting the juice extraction unit 10 will be described in more detail with reference to the drawings.

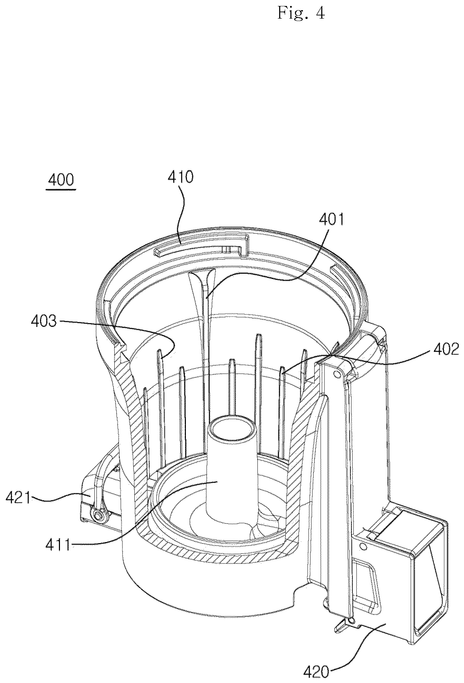

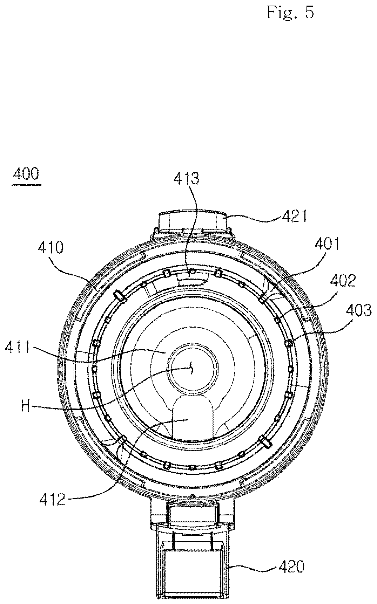

First, the juice extraction drum 400 according to the present invention will be described with reference to FIGs. 4 and 5.

FIG. 4 is a cut-away perspective view of the juice extraction drum, and FIG. 5 is a plan view of the juice extraction drum.

The juice extraction drum 400 receives the screw 300 therein and serves to crush and squeeze a juice extraction target by interaction with the screw 300. A plurality of first rib protrusions 401 may be formed on an inner circumferential surface of the juice extraction drum 400 so as to protrude therefrom.

The first rib protrusions 401 are disposed spaced apart from each other along the inner circumferential surface of the juice extraction drum 400, and each first rib protrusion 401 may extend in an upward-downward longitudinal direction of the juice extraction drum 400 or may extend in a state of being slightly inclined relative to the upward-downward longitudinal direction of the juice extraction drum 400. Preferably, the first rib protrusions 401 are formed throughout the entire section of the juice extraction drum 400 in the upward-downward longitudinal direction thereof.

The first rib protrusions 401 allow for more efficient squeezing and crushing of the juice extraction target by interaction with the screw 300. Each of the first rib protrusions 401 acts as a kind of catching protrusion, increasing frictional force on the inner circumferential surface of the juice extraction drum 400 to smoothly move the juice extraction target, thereby preventing stagnation of the juice extraction target without falling to the bottom of the juice extraction drum 400.

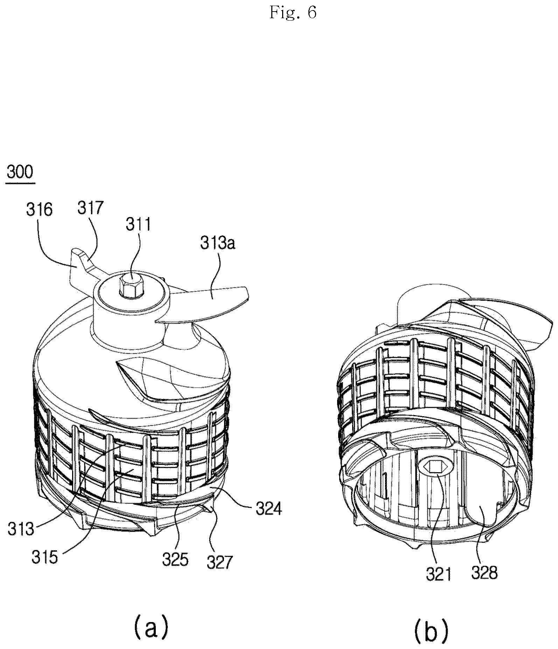

In addition, the first rib protrusions 401 enable large squeezing and crushing force to be generated on the juice extraction target. In the state in which the juice extraction target is caught and supported by the first rib protrusions 401, the juice extraction target may be crushed and squeezed by interaction between the first rib protrusions and a screw thread 313 (shown in FIG. 6) formed on an outer circumferential surface of the screw 300 that is rotated.

In addition, a plurality of second rib protrusions 402 may be formed on the inner circumferential surface of the juice extraction drum 400.

In the same manner as the first rib protrusions 401, the second rib protrusions 402 are disposed spaced apart from each other along the inner circumferential surface of the juice extraction drum 400, and may extend in the longitudinal direction of the juice extraction drum 400 or may extend in a state of being slightly inclined relative to the longitudinal direction of the juice extraction drum 400.

The second rib protrusions 402 may be formed at some sections of the juice extraction drum 400 in the longitudinal direction thereof, e.g., a lower end part of the juice extraction drum 400, so as to have a length less than the length of the first rib protrusions 401.

The second rib protrusions 402 enable large squeezing and crushing force on the juice extraction target to be generated in conjunction with the first rib protrusions 401, and further crush the juice extraction target, which has been primarily crushed by the first rib protrusions 401 at an upper end part of the juice extraction drum 400, at the lower end part of the space of the juice extraction drum 400 in conjunction with the first rib protrusion 401, resulting in finer and more uniform crushing of the juice extraction target.

If the second rib protrusions 402 are formed at a middle part of the juice extraction drum 400, not at the lower end part of the juice extraction drum, the juice extraction target is finely crushed at the middle part of the juice extraction drum 400, resulting in a sharply reduced particle size of the juice extraction target, whereby the juice extraction target may not be caught by the inner circumferential surface of the juice extraction drum 400 at the lower end part of the juice extraction drum 400 and may rotate with the screw 300. In this case, the juice extraction target is not smoothly transferred to the lower end part of the juice extraction drum 400 and stagnates, causing inconvenience that, when an additional juice extraction target is introduced, the juice extraction target must be forcibly pressed. However, if the second rib protrusions 402 are formed at the lower end part of the juice extraction drum 400, the particle size of the juice extraction target may be changed stepwise, whereby the juice extraction target may be smoothly transferred to the lower end part of the space of the juice extraction drum 400, and the juice extraction target transferred to the lower end part of the juice extraction drum 400 may be more finely crushed.

In addition, if the second rib protrusions 402 are formed at the lower end part of the juice extraction drum 400, the pressure of the pomace of the juice extraction target on the juice extraction drum 400 and the screw 300 gradually increases as the juice extraction target is smoothly transferred from the upper end part to the lower end part of the juice extraction drum 400, and the juice of the juice extraction target may flow smoothly into the separating screw 300 through the gap formed between a barrier plate 315 and a rib 323 of the separating screw 300, which will be described later, by the pressure, and may be discharged out of the juice extraction drum 400.

The first rib protrusions 401 and the second rib protrusions 402 are not necessarily formed in the longitudinal direction of the juice extraction drum 400, and may be formed at a constant inclination relative to longitudinal direction of the juice extraction drum 400 so as to intersect with the helical screw thread 313 formed on the outer surface of the screw 300, provided that efficient transfer and squeezing of the juice extraction target can be achieved.

A plurality of third rib protrusions 403 may be formed on the inner circumferential surface of the juice extraction drum 400. The third rib protrusions 403 may be formed between the first rib protrusions 401 or between the second rib protrusions 402.

In the same manner as the first rib protrusions 401 or the second rib protrusions 402, the third rib protrusions 403 may extend in the longitudinal direction of the juice extraction drum 400, with a length that is shorter than the first rib protrusions 401 and longer than the second rib protrusions 402.

If the third rib protrusions 403 are further formed, the number of rib protrusions that crush the juice extraction target increases in turn from the upper end part to the lower end part of the juice extraction drum 400 in the longitudinal direction. In other words, the first rib protrusions 401 crush the juice extraction target at the uppermost end of the juice extraction drum 400, the first rib protrusions 401 and the third rib protrusions 403 crush the juice extraction target at the next height, and the first rib protrusions 401, the second rib protrusions 402, and the third rib protrusions 403 crush the juice extraction target at the next height, whereby the juice extraction target may be gradually crushed and more smoothly move downwardly of the juice extraction drum 400.

A watertight cylinder 411 extending upward from the bottom surface of the juice extraction drum 400 and having a drum hole H, through which a lower rotating shaft 321 (shown in FIG. 6) of the screw 300 extends, may be formed in the center of the juice extraction drum 400. The watertight cylinder 411 extending upward from the bottom surface of the juice extraction drum 400 prevents juice or the like in the juice extraction drum 400 from leaking out through the drum hole H.

The lower rotating shaft 321 of the screw 300 and the driving shaft (not shown) protruding from the main body (not shown) under the juice extraction drum 400 may be coupled to each other through the drum hole H. Consequently, the driving force of the motor may be transmitted to the screw 300 by such coupling.

As will be described later, the screw 300 according to the present embodiment is a separating screw 300 formed by coupling between a first module 310 and a second module 320, and juice produced by juice extraction may be transferred into the separating screw 300 to separate the juice from pomace.

As shown in FIG. 5, a juice discharge hole 412, through which the juice of the juice extraction target introduced into the separating screw 300 is discharged, is formed at an inner position of the separating screw 300 in the bottom surface of the juice extraction drum 400 on which the separating screw 300 is seated and a pomace discharge hole 413, through which the pomace of the juice extraction target is discharged, is formed at an outer position of the separating screw 300 in the bottom surface of the juice extraction drum 400.

The juice discharge hole 412 is in communication with the juice outlet 420 to discharge the juice of the juice extraction target to the outside of the juice extraction drum 400, and the pomace discharge hole 413 is in communication with the pomace outlet 421 to discharge the pomace of the juice extraction target to the outside of the juice extraction drum 400 in a state of being separated from the juice.

At least one engagement protrusion 410 is formed on an inner edge of an upper part of the juice extraction drum 400, and the engagement protrusion 410 is a means that is coupled to a lower part of the hopper 100. In the embodiment of the present invention, the engagement protrusion 410 is formed in the shape of a protrusion bent at right angles along the inner circumferential surface of the upper part of the juice extraction drum 400, and a horizontal protrusion gradually increases in thickness from one side to the other side.

Next, the screw according to the present invention will be described with reference to FIGs. 6 to 9.

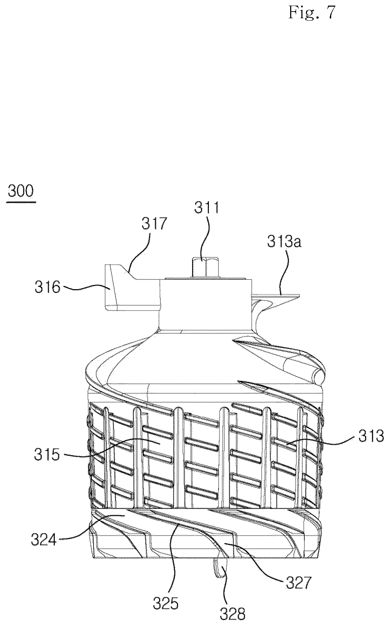

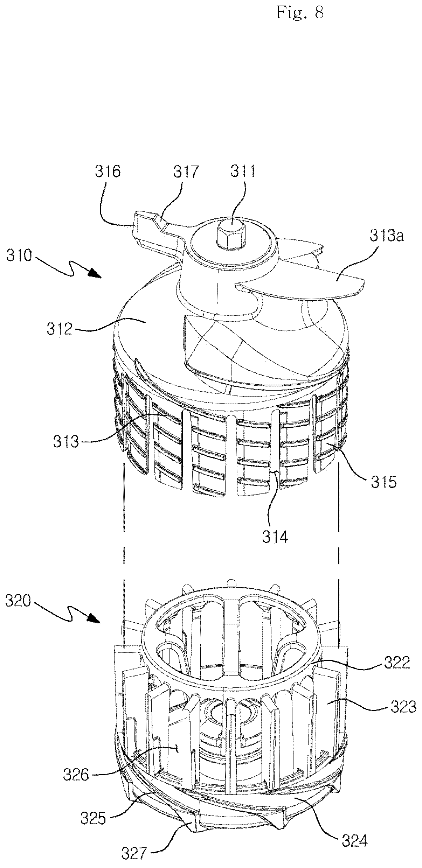

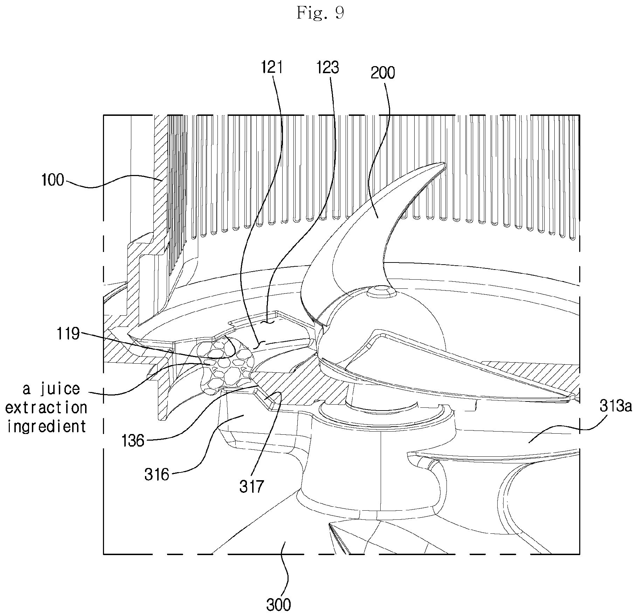

FIG. 6 is a perspective view of the screw, FIG. 7 is a side view of the screw, FIG. 8 is an exploded perspective view of the screw, and FIG. 9 is a view showing a touch portion and a through-hole of the screw.

The juice extraction drum 400 has a cylindrical shape with an open upper part, and the separating screw 300 is disposed in the juice extraction drum. The screw 300 receives rotational force from the driving shaft of the main body to perform rotational motion, and interacts with the juice extraction drum 400 to squeeze and crush the juice extraction ingredient.

As shown in FIG. 8, the screw 300 according to the present invention includes a first module 310 and a second module 320, each of which is approximately cylindrical in shape, and the first module 310 and the second module 320 may be separably coupled to each other.

The first module 310 may include a cylindrical body portion 312 having a hollow formed therein. Describing the shape of the body portion 312 in more detail, the body portion is formed to have an approximately cylindrical shape, as shown. An upper end part of the first module 310 may be formed with a radius that gradually decreases in an upward direction.

A lower end surface of the body portion 312 may be open, an upper end of the body portion may be closed, and at least one screw thread 313 may be formed on an outer surface of the body portion. In addition, an upper end screw blade 313a may be formed at an upper end of a body of the screw. The screw thread 313 may be formed on the outer surface of the body portion 312 so as to protrude in a spiral shape, and a part of the screw thread 313 may extend to the top of the screw 300 to form a horizontal upper end screw blade 313a.

The upper end screw blade 313a mainly functions to cut the juice extraction ingredient and to transfer the juice extraction ingredient downward along the screw thread 313 connected thereto, and the screw thread 313, which is provided at a lower part of the screw 300 under the upper end screw blade 313a and has a relatively small protruding height, mainly functions to crush and squeeze the juice extraction ingredient crushed into small pieces into smaller sizes for juice extraction.

A plurality of slits 314 may be formed in the body portion 312 in a circumferential direction. The slits 314 may extend toward a lower end of the main body 312 so as to be elongated in an axial direction. A barrier plate 315 is formed between two neighboring slits 314. As the plurality of slits 314 is formed in the circumferential direction, therefore, the barrier plate 315 may also be formed in plural in the circumferential direction. The distance between the slits 314 is preferably formed uniformly, but is not necessarily limited thereto.

As shown in FIG. 6, a downwardly protruding lower rotating shaft 321 may be formed in the center of the hollow of the first module 310, and the lower rotating shaft 32 may be coupled to a driving shaft (not shown) to receive power.

In addition, an upwardly protruding upper rotating shaft 311 may be formed on an upper end of the first module 310, and the upper rotating shaft may be connected to the cutting unit 200 in the hopper 100 through a connection hole 115 formed in a lower end surface of the hopper 100 to transmit the rotational force of the screw 300 to the cutting unit 200. A detailed structure of the first module will be described later.

As shown in FIG. 8, the second module 320 may include a body portion 322 and a pomace discharge guide portion 324.

The body portion 322 is cylindrical in shape and is inserted into the hollow of the first module 310.

The body portion 322 may have a plurality of ribs 323 formed in a circumferential direction in the shape of an axially elongated bar. In addition, in the present embodiment, the ribs 323 may be formed on an outer surface of the body portion 322 so as to protrude outward in a radial direction.

Since the ribs 323 are inserted into the slits 314 of the first module 310, the ribs may be formed so as to be spaced apart from each other by a distance equal to the distance between the slits 314. In this case, the width of the ribs 323 may be slightly less than the width of the slits 314.

A juice passage hole 326, through which juice is moved into the separating screw 300, may be formed between neighboring ribs 323. If a large juice passage hole 326 is formed in the space between neighboring ribs 323 or if juice passage holes 326 are formed in the entire space between neighboring ribs 323, the second module 320 may be formed in an upper ring shape or in a shape in which the ribs 323 extend downward from the disc-shaped body portion 322. That is, depending on the shape of the juice passage hole 326, the body portion 322 may be formed as a cylindrical shape (ring shape) with a short vertical length only at upper ends of the ribs 323, or may be formed as a long cylindrical shape that includes the entire vertical length of the ribs 323.

In addition, lower ends of the plurality of ribs 323 may be formed so as to be supported separately in the shape of a ring, but in the present embodiment, the lower ends of the ribs 323 are formed so as to be supported by an upper surface of the pomace discharge guide portion 324.

The pomace discharge guide portion 324 is formed under the body portion 322 in the shape of a ring. The diameter of the pomace discharge guide portion 324 may be slightly greater than the diameter of the body portion 322, and the lower ends of the ribs 323 protruding from the body portion 322 in the radial direction may be formed so as to be supported by the upper surface of the pomace discharge guide portion 324.

An outer surface having a predetermined vertical length is formed on the outside of the pomace discharge guide portion 324, and a radially protruding protrusion 325 may be formed on the outer surface. As will be described later, when the first module 310 and the second module 320 are coupled to each other, the pomace discharge guide portion 324 forms a lower end part of the separating screw 300, and the protrusion 325 may push or agitate the pomace that has moved to the lower side of the separating screw 300 during the juice extraction process such that the pomace is smoothly discharged in conjunction with a protrusion 327, which will be described later.

If the pomace stagnates at the lower side of the separating screw 300, the separating screw 300 may be overloaded, which may reduce juice extraction efficiency and cause noise and vibration, whereas in the present invention, the pomace may be more effectively discharged by the protrusion 325.

The protrusion 325 may be formed on an outer surface of the pomace discharge guide portion 324 in plural in the circumferential direction, and may be inclined upward and downward in the direction of rotation of the separating screw 300. In addition, the protrusion may be formed in a shape extending from the screw thread 313 of the second module 320.

A plurality of protrusions 327 may be formed at a lower end part of the spirally extending protrusion 325 in the circumferential direction. The protrusions 327 may not extend from the protrusion 325, but may be formed separately. The protrusions 327 may have a generally inverted triangular shape as shown, wherein one surface of the separating screw 300 in the circumferential direction may be formed as an inclined surface. Since a lower end part of the pomace discharge guide portion 324 is inclined inward with a radius gradually decreasing in a downward direction, the protruding height of the protrusions 327 may gradually increase in the downward direction. As the lower end part of the pomace discharge guide portion 324 is inclined inward, the space for accumulating pomace on the lower side of the pomace discharge guide portion 324 may be relatively large compared to the upper part. At this time, the protrusions 327 function to downwardly sweep the pomace accumulated in the space.

As shown in FIG. 6, a sweep rib 328 protruding radially inward in the upward-downward longitudinal direction is formed on an inner surface of the second module 320 to perform a function of sweeping the juice in the separating screw 300. At this time, as shown, a lower end part of the sweep rib 328 is formed so as to protrude toward the bottom surface of the juice extraction drum 400, whereby the juice may be prevented from settling to maintain a fresh flavor. The outside of the lower end part of the sweep rib 328 in the radial direction may be spaced apart from the inner surface of the second module 320. At this time, the juice may flow through the space such that the juice is swept by the sweep rib 328 while minimizing resistance of the juice when the separating screw 300 is rotated.

The first module 310 and the second module 320 may be separably coupled to each other, and when coupled, the ribs 323 of the second module 320 are inserted into the slits 314 of the first module 310.

In the separating screw 300 of the present invention, the width of the ribs 323 is slightly less than the width of the slits 314, whereby a gap is formed between each of the ribs 323 and a corresponding one of the slits 314 when the first module 310 and the second module 320 are coupled to each other. In the present invention, since the pomace discharge guide portion 324 having a predetermined vertical thickness is formed at the lower part of the second module 320, the gap formed by coupling between each of the slits 314 and a corresponding one of the ribs 323 may have a shape that extends only to the upper end of the pomace discharge guide portion 324, rather than extending to the lower end part of the separating screw 300.

As the separating screw 300 rotates, the juice of the juice extraction target produced between the outer surface of the separating screw 300 and the juice extraction drum 400 may move into the separating screw 300 through the gap, whereby the juice may be spatially separated from the pomace. That is, the separating screw 300 may serve to squeeze and crush the juice extraction target by interacting with the juice extraction drum 400 and at the same time may serve to separate the juice and the pomace from each other. Accordingly, a conventional mesh drum disposed between the juice extraction drum 400 and the screw 300 in order to separate the juice and the pomace from each other may be omitted.

The gap formed between the barrier plate 315 and the rib 323 is narrow in the state in which the first module 310 and the second module 320 of the separating screw 300 are coupled to each other. When the first module 310 and the second module 320 are separated from each other, however, the gap between the barrier plates 315 of the first module 310 and the gap between the ribs 323 of the second module 320 are wide enough to facilitate cleaning of the separating screw 300.

When the first module 310 and the second module 320 are coupled to each other, the diameter of the pomace discharge guide portion 324 may be approximately the same as the diameter of the body portion 312 of the first module 310 such that the outer surfaces of the first module and the second module are level with each other, but the diameter of the pomace discharge guide portion 324 may be slightly greater than the diameter of the body portion 312 of the first module 310 such that a small step is formed on the upper surface of the pomace discharge guide portion 324.

At least one spiral screw thread 313 may be formed on the outer surface of at least one of the first module 310 and the second module 320.

The screw thread 313 forms a kind of irregularities on the outer surface of the separating screw 300 to enable crushing, squeezing, and filtering processes of the juice extraction target to occur more effectively between the separating screw 300 and the juice extraction drum 400 when the separating screw 300 is rotated and to enable the juice extraction target to smoothly move to the lower part of the juice extraction drum 400.

The screw thread 313 is preferably formed on both the outer surfaces of the first module 310 and the second module 320 (more specifically, the outer surfaces of the ribs 323), and when the first module 310 and the second module 320 are coupled to each other, the screw thread 313 may be formed on the outer surfaces of the first module 310 and the second module 320 in a continuous shape.

In this case, it is preferable for the protrusion 325 of the pomace discharge guide portion 324 to be formed to radially protrude farther than the screw thread 313 formed at the lower part of the separating screw 300.

The screw 300 may be provided with a touch portion 316 that protrudes above the screw body. More specifically, as shown in FIG. 7, the touch portion 316 may be formed so as to protrude upward after horizontally extending from the upper end of the screw body while having a predetermined thickness. At this time, the upwardly protruding part may be formed such that an inclined surface 317 is formed on one side and the sectional area is gradually decreased in an upward direction. A lower surface of the touch portion may be formed as a curved surface. In this case, the shape of the touch portion 316 is not limited to the shape shown and may be variously changed.

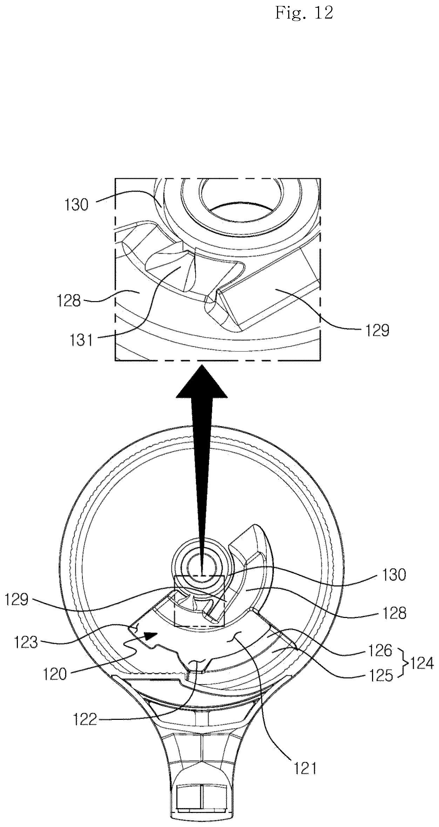

An upper end of the touch portion 316 may be formed so as to have a predetermined horizontal surface, as shown. In this case, the height of an upper end surface of the touch portion 316 is greater than the height of the upper end screw blade 313a. The upper end surface of the touch portion 316 may be located immediately under a lower end of the through-hole 121 (shown in FIGs. 9 and 12) in the outer surface of the bottom of the hopper 100.

The juice extraction ingredient pre-cut in the hopper 100 may be transferred to the screw 300 under the hopper 100 through the through-hole 121, wherein the juice extraction ingredient may be caught in the through-hole 121 and may not be transferred downward. In particular, as will be described later, since the outlet 120 formed in the bottom surface of the hopper 100 of the present invention is three-dimensionally formed, the through-hole 121 has a predetermined vertical height space. As a result, a problem of the juice extraction ingredient being caught in the predetermined height space and not being transferred downward may easily occur.

Since the upper end screw blade 313a is disposed somewhat lower than the lower end of the through-hole 121 in the outer surface of the bottom of the hopper 100 so as to be spaced apart therefrom and extends in a horizontal direction, it is not easy for the upper end screw blade to touch the juice extraction ingredient caught in the through-hole 121. However, in the present invention, since the touch portion 316 is formed so as to protrude upward above the screw body, the touch portion may touch the lower end part of the juice extraction ingredient in the through-hole 121 to push up or crush the juice extraction ingredient, whereby it is possible to solve the problem that the juice extraction ingredient is caught in the through-hole 121 and is not transferred downward.

When the touch portion 316 is formed on the screw 300, it is preferable to design the touch portion so as to be symmetrical with the upper end screw blade 313a about the center of gravity. This is because, if the center of gravity of the screw 300 is not at the center of rotation of the screw 300 and is eccentric to the left or the right, vibration may occur as the screw 300 rotates.

Although not shown, the touch portion 316 may be formed in plural. Even when a plurality of touch portions 316 is formed, it is preferable to design the touch portions 316 such that the overall center of gravity of the screw 300 is located at the center of rotation. Thus, when the upper end screw blade 313a is omitted and the plurality of touch portions 316 is formed, it is preferable to design the plurality of touch portions 316 so as to be symmetrical with each other in the circumferential direction.

If the width of the upper end surface of the touch portion 316 in the radial direction is too small, the touch portion 316 may touch the juice extraction ingredient caught only in a narrow region of the lower end of the through-hole 121 while being rotated. On the other hand, if the width of the upper end surface of the touch portion 316 in the radial direction is too large, the touch portion 316 may become oversized, which may weaken the strength of the touch portion and generate a risk of breakage. Therefore, it is preferable for the width of the upper end surface of the touch portion 316 in the radial direction not to be too much greater or too much less than the width of the through-hole 121 in the radial direction to the extent that it is capable of touching a predetermined region of the through-hole 121 in the radial direction. In addition, it is preferable for the upper end surface of the touch portion 316 to be formed to pass through the center of the through-hole 121 in the radial direction.

As shown in FIGs. 9, 13, and 14, a central portion of the outer surface of the bottom of the hopper 100 may be formed so as to protrude farther than a peripheral portion in order to guide the upper end of the screw body. In this case, an inclined surface 136 formed from the central portion of the outer surface of the bottom of the hopper 100 toward the through-hole 121 in the radial direction may be formed. An inclined surface 317 may be formed on an inner surface of the upper end part of the touch portion 316 such that the screw 300 can be guided along the inclined surface 136 when rotated.

The screw 300 at which the touch portion 316 is formed may be applied not only to a juice extractor having the structure including the hopper 100 as shown but also to a juice extractor having a structure in which an inlet, through which the juice extraction ingredient is introduced, is formed in the upper part of the screw 300, the juice extraction ingredient is caught in the inlet and is not be easily transferred downward, and the upper end screw blade 313a formed at the upper end of the screw body cannot effectively touch the juice extraction ingredient caught in the inlet.

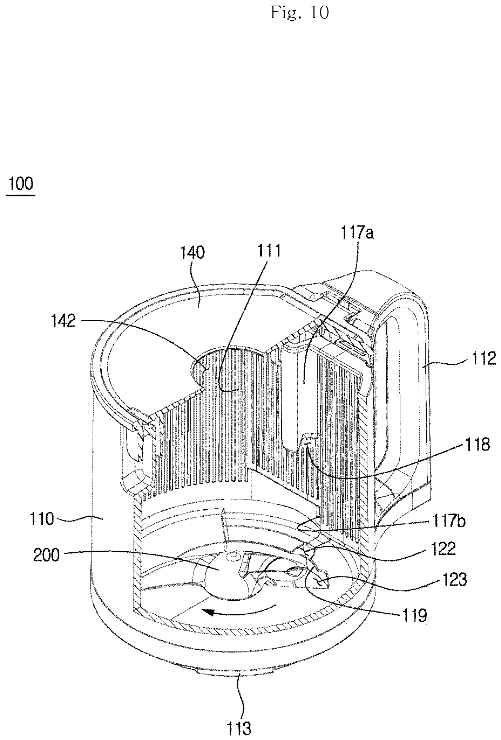

Next, the hopper 100 according to the present invention will be described with reference to FIGs. 10 to 18.

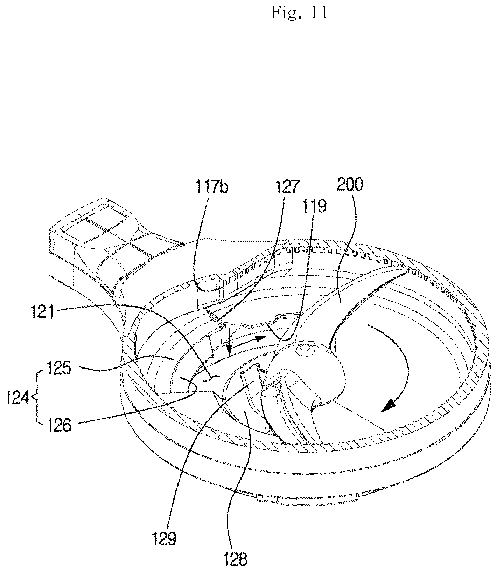

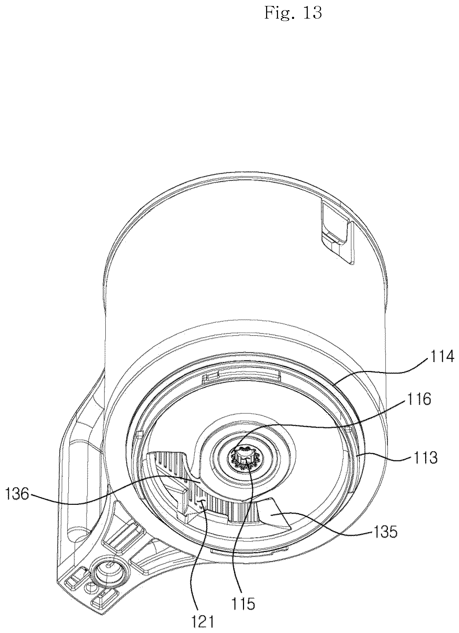

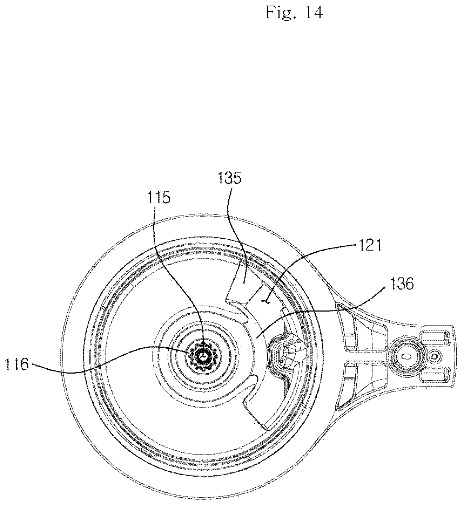

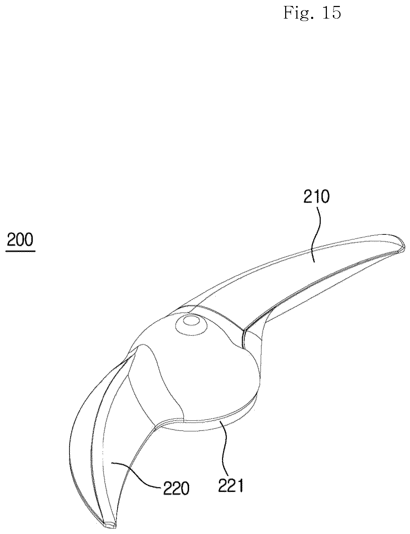

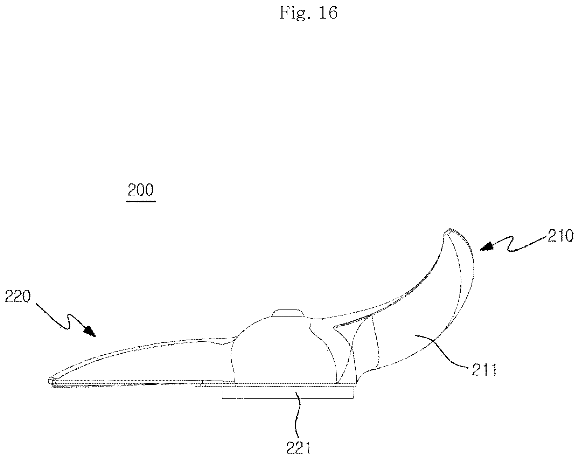

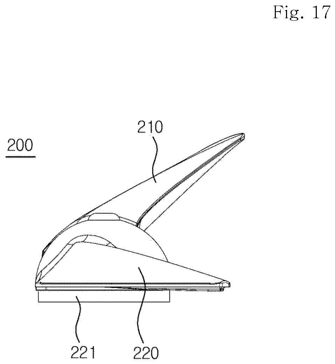

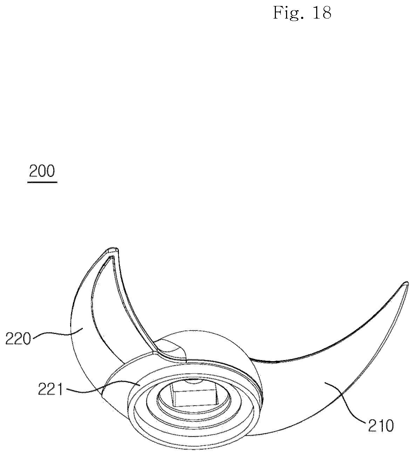

FIG. 10 is a cut-away perspective view showing the interior of the hopper, FIG. 11 is a perspective view showing an inner surface of the bottom of the hopper, FIG. 12 is a plan view showing the inner surface of the bottom of the hopper, FIG. 13 is a perspective view showing an outer surface of the bottom of the hopper, FIG. 14 is a bottom view showing the outer surface of the bottom of the hopper, FIG. 15 is a perspective view of the cutting unit, FIGs. 16 and 17 are side views of the cutting unit of FIG. 15, and FIG. 18 is a perspective view showing a lower surface of the cutting unit.

The hopper 100 is separably coupled to the upper part of the juice extraction drum 400. The hopper 100 forms a space for storing the introduced juice extraction ingredient (e.g., fruits, vegetables, and grains). The cutting unit 200 rotatably fixed to the bottom surface of the hopper 100 cuts and agitates the juice extraction ingredient while being rotated and supplies the same to the juice extraction drum 400 located thereunder. In the present embodiment, the cutting unit 200 cuts and agitates the juice extraction ingredient while being rotated by power received from the screw 300 and supplies the same to the juice extraction drum 400 located thereunder. Thus, in the present invention, the juice extraction ingredient is cut in the hopper 100, and therefore there is no need to pre-cut and introduce the juice extraction ingredient.

The hopper 100 may mainly include a hopper housing 110 and a lid portion 140, and the cutting unit 200 may be mounted in the hopper 100, whereby the hopper 100 may also include the cutting unit 200.

The hopper housing 110 is cylindrical or conical in shape and has a space in which the juice extraction ingredient introduced through an open upper part is received.

A bottom surface of the hopper housing 110 may be formed so as to be separable from a cylindrical body located thereabove; however, the present invention is not limited thereto, and the bottom surface and the cylindrical body of the hopper housing may be integrally formed.

The cutting unit 200 may be rotatably mounted to the bottom surface of the hopper housing 110, and the cutting unit 200 may be rotated along with the screw 300 by power received from the screw 300 in the juice extraction drum 400.

On an inner surface of the hopper housing 110, a comb protrusion 111 protruding inward so as to extend in the longitudinal direction may be formed in the circumferential direction. This serves to prevent a light juice extraction ingredient, such as leafy vegetables, from absorbing moisture and sticking to the inner surface of the hopper housing 110 and to allow the light juice extraction ingredient to be easily removed therefrom. Preferably, the comb protrusion 111 is formed on the entire inner surface of the hopper housing 110.

A handle 112 configured to enable a user to hold a container may be formed on one side of an outer circumferential surface of the hopper housing 110.

A predetermined number of coupling protrusions 113 protruding so as to extend in the horizontal direction is formed along an outer edge of the lower end part of the hopper housing 110, and the juice extraction drum 400 and the hopper 100 may be separably coupled to each other by the coupling protrusions and the engagement protrusions 410 (shown in FIG. 4) formed on the inner edge of the upper part of the juice extraction drum 400. The two members 100 and 400 may be coupled to each other by inserting the coupling protrusions 113 into spaces between the engagement protrusions 410 and rotating the coupling protrusions 113 so as to be located under the engagement protrusions 410.

As shown in FIG. 13, a packing ring 114, which is formed in the form of a circular ring, may be fixed to the upper parts of the coupling protrusions 113 at the outer edge of the lower end part of the hopper housing 110. When the hopper 100 is coupled to the upper part of the juice extraction drum 400, the packing ring 114 forms a seal between the two members 100 and 400.

The lid portion 140 may be hingedly coupled to the upper end of the hopper housing 110 to open and close the open upper part of the hopper housing 110. An additional inlet 142, which is a through-hole, may be formed in the center of the lid portion 140. The additional inlet 142 may be used to further introduce a juice extraction ingredient having a relatively small size into the hopper 100 during juice extraction. In addition, a push rod (not shown) may be inserted through the additional inlet 142 to apply force such that the juice extraction ingredient in the hopper 100 moves downward in the hopper 100. Although not shown, a separate stopper configured to close the additional inlet 142 may be formed.

A connection hole 115 is formed through the center of the bottom surface of the hopper housing 110. The upper rotating shaft 311 of the screw 300 located under the hopper 100 and the cutting unit 200 located above the bottom surface of the hopper 100 may be connected to each other through the connection hole 115 such that power can be transmitted therebetween.

The cutting unit 200 is rotatably coupled to the inner bottom surface of the hopper 100, is rotated in the hopper 100 by rotational force received from the screw 300 located in the juice extraction drum 400, cuts and agitates the juice extraction ingredient introduced into the hopper 100, and supplies the cut juice extraction ingredient into the juice extraction drum 400 located under the hopper 100 through the outlet 120 formed in the bottom of the hopper 100.

Although the cutting unit 200 is directly fastened to the upper rotating shaft 311 of the screw 300 to receive power from the screw 300, a rotatable power transmission portion 116 may be formed above the connection hole 115, wherein the upper rotating shaft 311 of the screw 300 and the lower surface of the cutting unit 200 are fastened to the power transmission portion 116 to transmit the rotational force of the screw 300 to the cutting unit 200 through the power transmission portion 116.

In the present invention, since the cutting unit 200 does not cut the juice extraction ingredient while being rotated in the state in which both sides thereof are supported between the lower end and the upper end of the hopper 100 in the hopper 100 but cuts the juice extraction ingredient in the state in which one side thereof is supported only at the lower end of the hopper 100, a wide open space having no interference is formed above the cutting unit 200 in the hopper 100. Therefore, since the entire space above the cutting unit 200 forms an open space, it is possible to introduce and cut a juice extraction ingredient having a large size, such as whole fruits, into the hopper 100.

The cutting unit 200 may include a chopping blade 210 and a cutting blade 220. The chopping blade 210 and the cutting blade 220 may be rotated at the same speed. In this case, the chopping blade 210 and the cutting blade 220 may be integrally formed, whereby the chopping blade 210 and the cutting blade 220 may be rotated together at the same speed.

The chopping blade 210 is formed so as to extend upward from the center of rotation in the direction of rotation of the cutting unit 200 in a spiral shape. Preferably, an upper end part of the chopping blade 210 is formed in the shape of a pointed hook having a section gradually decreasing toward the end thereof. In addition, the chopping blade 210 is not formed as a plate but is formed so as to have a predetermined thickness, and is formed in the shape of a cow horn because the section of the chopping blade gradually decreases in the upward direction and the chopping blade extends upward while being curved in a spiral shape.

The chopping blade 210, which faces upward in the shape of a hook, mainly serves to chop and crush the juice extraction ingredient introduced from thereabove. In addition, since the chopping blade 210 is not formed as a plate but is formed so as to have a predetermined thickness, it is possible to prevent stem vegetables, such as water parsley, from being wrapped around the chopping blade 210. In addition, the shape of the chopping blade, which spirally extends in the shape of a cow horn, serves to guide the cut juice extraction ingredient so as to move downward. At this time, an inner surface of the chopping blade 210 in the radial direction is formed as an inclined curved surface 211 that faces radially outward in a downward direction such that the juice extraction ingredient crushed by the chopping blade 210 can be smoothly moved in the downward direction along the curved surface as the chopping blade 210 is rotated.

The higher the height of the upper end of the chopping blade 210, the higher the crushing effect, and it is preferable for the height of the upper end of the chopping blade to be at least greater than the height of an upper end surface of the cutting blade 220. In addition, it is preferable for the length of the chopping blade 210 in the radial direction to be as large as possible in the radial direction within a range within which interference with the inner surface of the hopper 100 does not occur.

The cutting blade 220 is formed above the bottom surface of the hopper 100 so as to horizontally extend. The cutting blade 220 is preferably formed so as to have a predetermined thickness in the vertical direction as well. As shown in FIG. 17, a blade may be formed at the upper end where front and rear inclined surfaces of the cutting blade 220 in the rotation direction join each other. In this case, the end of the cutting blade 220 may be formed so as to have a height gradually decreasing in the radial direction. The cutting blade 220 serves to secondarily crush the juice extraction ingredient, which has been crushed by the chopping blade 210 and moved downward, using the blade formed at the upper end thereof, and, as the cutting blade 220 is formed so as to have a predetermined thickness, the cutting blade may push the juice extraction ingredient located on the bottom surface of the hopper 100 so as to be smoothly discharged through the outlet 120. This is because, if the thickness of the cutting blade 220 is small, the cutting blade 220 may not push the juice extraction ingredient located on the bottom surface of the hopper 100 and may run idle.

Preferably, but not necessarily, the cutting blade 220 extends from the center of rotation of the cutting unit 200 in the direction 180-degrees opposite the direction in which the chopping blade 210 extends. In this case, the cutting blade 220 is preferably formed in a shape curved in the direction opposite the direction of rotation of the cutting unit 200.

In the present invention, therefore, since the chopping blade 210 and the cutting blade 220 extend from the center of rotation in opposite directions and the chopping blade 210 and the cutting blade 220 are curved to face each other, the overall shape of the cutting unit 200 resembles a crescent moon.

In addition, since the chopping blade 210 and the cutting blade 220 are not located in the same plane and the chopping blade 210 is curved in a spiral shape and extends upward, the cutting unit 200 has a shape that is twisted in space while the overall shape of the cutting unit 200 resembles a crescent moon.

In the same manner as the chopping blade 210, it is preferable for the length of the cutting blade 220 to be as large as possible in the radial direction within a range within which interference with the inner surface of the hopper 100 does not occur.

A circular, ring-shaped protrusion 221 may be formed on the lower surface of the cutting unit 200. As shown in the enlarged view of FIG. 12, a circular recess 130, into which the circular protrusion 221 is inserted, may be formed in the bottom surface of the hopper 100 so as to correspond to the circular protrusion 221. Since the cutting unit 200 rotates in the state in which the circular protrusion 221 is inserted into the circular recess 130, therefore, it is possible to prevent the pomace in the hopper 100 from flowing toward a rotating shaft of the cutting unit 200. Furthermore, the problem of long vegetables or fibers, such as stem vegetables, being wrapped around the rotating shaft of the cutting unit 200 may be solved.

Although the uneven structure in which the circular protrusion 221 is formed on the lower surface of the cutting unit 200 and the circular recess 130 is formed in the bottom surface of the hopper 100 is described by way of example in the present embodiment, an uneven structure in which a circular recess is formed in the lower surface of the cutting unit 200 and a circular protrusion is formed on the bottom surface of the hopper 100 may also be provided.

In this case, the circular recess 130 in the bottom surface of the hopper 100 may have a pomace outlet 131 communicating with the circular recess 130 to discharge the pomace in the circular recess 130 out of the circular recess 130. As shown in the enlarged view of FIG. 12, the pomace outlet 131 may be formed in a structure in which a part of the circular recess 130 is further dug downward at a predetermined position of the circular recess 130 so as to be connected to a space in the hopper 100 outside the circular recess 130 or one side of the outer surface of the circular recess 130 is open. Consequently, the pomace in the circular recess 130 may be pushed and directly discharged through the pomace outlet 131 as the cutting unit 200 is rotated. In this case, the pomace outlet 131 is preferably formed on one side of a stagnation portion 128, which will be described later, such that the discharged pomace can be discharged to the stagnation portion 128.

When describing the configuration of the hopper 100 again, at least one first inner protrusion 117a interacting with the chopping blade 210 may be formed on the inner surface of the hopper 100. The first inner protrusion 117a may be formed on the inner surface of the hopper 100 so as to protrude and extend in a direction perpendicular thereto. The first inner protrusion 117a interacts with the chopping blade 210, wherein the juice extraction ingredient introduced into the hopper 100 may be caught and held by the first inner protrusion 117a to improve the crushing efficiency by the chopping blade 210. If no first inner protrusion 117a is provided, the juice extraction ingredient may be rotated with the chopping blade 210 and may not be cut. However, when the chopping blade 210 is rotated in the state in which the juice extraction ingredient is supported in the rotational direction by the first inner protrusion 117a, the juice extraction ingredient may be easily crushed. Therefore, the first inner protrusion 1129 is preferably formed so as to have an inwardly protruding height greater than the inwardly protruding height of a second inner protrusion 1130, which will be described later, such that the juice extraction ingredient can be supported in the radial direction.

In this case, a lower end of the first inner protrusion 117a is preferably spaced apart from an upper end of the chopping blade 210 thereabove. In a lower end part of the first inner protrusion 117a, a through-recess 118 may be formed through both sides thereof. In this case, the through-recess 118 provides a space through which the ingredient crushed by the first inner protrusion 117a and the chopping blade 210 can be smoothly discharged in the circumferential direction. When hard vegetables or fruits, such as a carrot, are caught by the first inner protrusion 117a, the first inner protrusion becomes overloaded, and the space secured by the through-recess 118 allows the ingredient crushed by the first inner protrusion 117a and the chopping blade 210 to be discharged smoothly.

The through-hole 121 of the outlet 120 may be formed vertically under the first inner protrusion 117a. More specifically, the first inner protrusion 117a may be disposed above a first extension portion 122, which will be described later, as shown in FIG. 10. Consequently, the juice extraction ingredient that is cut and dislodged through the first inner protrusion 117a may fall vertically downward and may be directly introduced into the juice extraction drum 400 through the through-hole 121.

In addition, at least one second inner protrusion 117b interacting with the cutting blade 220 may be formed on the inner surface of the hopper 100. As shown in FIGs. 10 and 11, the second inner protrusion 117b may be formed on the inner surface of the hopper 100 while protruding inward in the radial direction so as to correspond to the position at which the end of the cutting blade 220 is rotated. The second inner protrusion 117b interacts with the cutting blade 220 to prevent the juice extraction ingredient from spinning without movement above the cutting blade 220, allowing the juice extraction ingredient to smoothly flow into the through-hole 121. Some of the juice extraction ingredient located on the bottom surface of the hopper 100 is pushed and introduced into the through-hole 121 as the cutting blade 220 is rotated, and some of the juice extraction ingredient is gradually moved outward in the radial direction by centrifugal force. When no second inner protrusion 117b is provided, the juice extraction ingredient located above the cutting blade 220 may not be introduced into the through-hole 121 and may spin without movement above the cutting blade 220. At this time, the juice extraction ingredient pushed out of the upper part of the cutting blade 220 by centrifugal force may collide with the second inner projection 117b and may fall off the cutting blade 220. The second inner protrusion 117b may also be formed on the outside of the first extension portion 122 in the radial direction under the first inner protrusion 117a such that the juice extraction ingredient that has collided with the second inner protrusion 117b and has fallen off the cutting blade can be easily introduced into the through-hole 121.

At least one outlet 120 may be formed between the center and the edge of the bottom surface of the hopper housing 110. In the present invention, the outlet 120 may be interpreted to include a hole formed through the bottom surface of the hopper housing 110 and a structure around the hole that allows an appropriate amount of juice extraction ingredient to move well downward through the hole. The juice extraction ingredient in the hopper 100 may be cut and agitated by the cutting unit 200 rotatably fixed to the bottom surface of the hopper 100 and may be supplied to the juice extraction drum 400 disposed under the hopper 100 through the outlet 120. In the figures, one outlet 120 is formed on one side of the bottom surface of the hopper 100; however, the present invention is not necessarily limited thereto, and a plurality of outlets may be spaced apart from each other by a predetermined distance.

The outlet 120 may include a through-hole 121 and a stepped portion 124.

The through-hole 121 is a hole formed vertically through the bottom surface of the hopper 100, and may be formed in the shape of an arc, as shown in FIG. 12. In this case, the width of the through-hole in the radial direction may be substantially constant, but the width of the through-hole in the radial direction may be gradually increased in the direction of rotation of the cutting unit 200. In addition, as will be described later, a first extension portion 122 or a second extension portion 123 may be formed to locally increase the width of the through-hole 121 in the radial direction.

The width of the through-hole 121 in the radial direction may be less than the radius of the bottom surface of the hopper 100 to prevent too much juice extraction ingredient from being transferred downward at one time, thereby preventing overload of the screw 300. As shown, the width of the through-hole 121 in the radial direction may be equal to less than half the radius of the bottom surface of the hopper 100.

However, if the radial width of the through-hole 121 is small, the juice extraction ingredient may not be transferred downward and may stagnate in the hopper 100. As will be described later, in the present invention, the structural features around the through-hole 121 allow an adequate amount of juice extraction ingredient to be smoothly transferred downward even if the size of the through-hole 121 is relatively small.

As shown in FIG. 11, the stepped portion 124 is formed on the inner surface of the bottom outside the through-hole 121. The stepped portion 124 may be recessed downward from the inner surface of the bottom to form a step 127 in the direction of rotation of the cutting unit 200. The bottom surface of the hopper 100 may be divided into an inner surface in the hopper 100 and an outer surface outside the hopper 100, which will be referred to and described herein as an inner bottom surface and an outer bottom surface.

When the stepped portion 124 is formed so as to be recessed downward from the inner bottom surface, the step 127 may be formed in the direction of rotation of the cutting unit 200. Consequently, when the cutting blade 220 of the cutting unit 200 is rotated, the juice extraction ingredient located on the bottom surface may be pushed by the cutting blade 220, may be cut to a smaller size by the cutting blade 220 in the state in which the juice extraction ingredient is supported by the step 127, and may be transferred to the bottom of the hopper 100 through the through-hole 121 located on one side of the step 127.

In this case, the stepped portion 124 may be formed at an outer edge of the through-hole 121 in the radial direction. In addition, the stepped portion 124 may be formed from the outside of the through-hole 121 in the radial direction to the edge of the inner bottom surface of the hopper 100. The juice extraction ingredient cut smaller than the width of the through-hole 121 in the radial direction may be easily moved downward through the through-hole 121, and the juice extraction ingredient cut larger than the width of the through-hole 121 in the radial direction cannot be moved downward through the through-hole 121, may be pushed by the rotation of the cutting blade 220 of the cutting unit 200 in a state of being supported by an upper surface of the stepped portion 124, and may be cut to a smaller size by the step 127 formed by the stepped portion 125 and a rear bottom surface.

The upper surface of the stepped portion 124 may be formed by a combination of a horizontal surface 125 and an inclined surface 126. As shown, the outside of the upper surface of the stepped portion 124 in the radial direction may be formed as the horizontal surface 125, and the inside of the upper surface of the stepped portion 124 in the radial direction may be formed as a result of the inclined surface 126, which is inclined downward in the direction opposite the radial direction, being connected to the horizontal surface 125. The juice extraction ingredient on the inclined surface 126 may be smoothly moved toward the through-hole 121 by the inclined surface 126.

As shown in FIG. 12, the first extension portion 122 configured to locally increase the width of the through-hole 121 in the radial direction may be formed at a rear end part of the stepped portion 124.

The width of the through-hole 121 in the radial direction may be locally increased by the first extension portion 122, whereby the juice extraction ingredient cut by the step 127 may be smoothly moved vertically downward. In addition, as shown in FIG. 11, the thickness of the bottom surface at the rear of the first extension portion 122 may be small, and the juice extraction ingredient may also be moved in the horizontal direction through the space formed by the upper surface of the stepped portion 124 and the outer bottom surface 119 at the rear and may be transferred to the bottom of the hopper 100. Here, "rear" means the rear in the direction of rotation of the cutting unit 200.

As such, the step 127 may be formed by the stepped portion 124 and the first extension portion 122 may be formed at the rear of the stepped portion 124, whereby a locally large hole may be formed in space, and therefore the juice extraction ingredient cut by the step 127 may be smoothly transferred downward. At this time, the amount of juice extraction ingredient transferred downward per unit time may be controlled by controlling the size of the first extension portion 122.

A stagnation portion 128 dug from the inner bottom surface may be formed inside the through-hole 121 in the radial direction. In this case, an upper surface of the stagnation portion 128 is preferably formed as a horizontal surface. If the upper surface of the stagnation portion 128 is formed as an inclined surface that is inclined downward toward the through-hole 121, the amount of juice extraction ingredient transferred to the bottom of the hopper 100 by the inclined surface may increase, whereby the screw 300 may be overloaded.

In this case, the height of the upper surface of the stagnation portion 128 is preferably formed lower than the horizontal surface 125 outside the upper surface of the stepped portion 124 in the radial direction. Therefore, a hole having a relatively large space may be formed between the outer bottom surface 119 of the rear of the stepped portion 124 and the upper surface of the stagnation portion 128, whereby the cut juice extraction ingredient may be transferred to the bottom of the hopper 100 in the vertical direction or the horizontal direction even at the rear of the first extension portion 122.

As shown in FIG. 12, the stagnation portion 128 may be formed so as to extend to the front of the through-hole 121.

A guide portion 129 having a guide surface that protrudes and extends tangentially from the inner surface of the stagnation portion 128 in the radial direction and faces the step 127 may be formed. The guide portion 129 guides the juice extraction ingredient located in front of the step 127 to move toward the step 127, whereby the cutting efficiency by the step 127 and the cutting blade 220 may be increased.

The pomace outlet 131 may be formed on one side of the stagnation portion 128. Consequently, the pomace located in the circular recess 130 may be transferred to the stagnation portion 128 through the pomace outlet 131 and may then be transferred to the bottom of the hopper 100.

The through-hole 121, which is formed vertically through the bottom surface of the hopper 100, may also extend to the rear of the first extension portion 122. In this case, a second extension 123 configured to locally increase the width of the through-hole 121 in the radial direction may be formed at a rear end of the extending through-hole 121. The juice extraction ingredient may also be transferred downward through the through-hole 121 at the rear of the first extension portion 122, wherein relatively large juice extraction ingredient may not be transferred downward and may stagnate due to the small size of the through-hole compared to the region where the first extension portion 122 is formed, whereby a bottleneck phenomenon may occur. Therefore, the relatively large juice extraction ingredient may be further moved downward by the second extension portion 123, which is separate from the first extension portion 122, whereby it is possible to reduce the stagnation of the cut juice extraction ingredient in the hopper 100.

As described above, the height of the outer bottom surface 119 between the first extension portion 122 and the second extension portion 123 may be greater than the height of the upper surface of the stepped portion 124, whereby the cut juice extraction ingredient may be moved through the space between the upper surface of the stepped portion 124 and the outer bottom surface 119 even in the horizontal direction and may be transferred to the bottom of the hopper 100.

In this case, the front of the bottom surface between the first extension portion 122 and the second extension 123 may have a relatively small thickness to form a blade. Consequently, the step 127 at the rear of the first extension portion 122 is formed as a relatively sharp blade, whereby it is possible to more effectively cut the juice extraction ingredient caught by the step 127.

As shown in FIGs. 13 and 14, inclined surfaces 135 and 136 may be formed on the outer bottom surface of the hopper 100. An inclined surface 135 facing the through-hole 121 in the circumferential direction is formed at the rear of the through-hole 121 in the direction of rotation of the cutting unit 200 to guide the juice extraction ingredient located under the through-hole 121 to be smoothly supplied to the juice extraction drum 400.

In addition, an inclined surface 136 facing the through-hole 121 from the center in the radial direction may be formed on the outer bottom surface of the hopper 100. The inclined surface 136 may also serve to guide the inclined side surface 317 of the touch portion 316 of the screw 300, in addition to serving to guide the juice extraction ingredient located under the through-hole 121 to be smoothly supplied to the juice extraction drum 400.

The scope of the present invention is not limited to the embodiment described above, but may be implemented by various embodiments within the scope of the appended claims. The various modifications that can be made by a person having ordinary skill in the art to which the invention pertains, without departing from the gist of the invention as claimed, are deemed to be within the scope of the claims.

## Claims

1. A juice extractor comprising a hopper having an inner space configured to receive a juice extraction ingredient and a cutting unit disposed in the hopper, the cutting unit being configured to pre-cut the juice extraction ingredient and to transfer the pre-cut juice extraction ingredient to a screw under the hopper by rotation, wherein
the screw comprises a touch portion protruding upward above a screw body, the touch portion being configured to touch the juice extraction ingredient caught in a through-hole formed in a bottom surface of the hopper.

2. The juice extractor according to claim 1, wherein an upper end of the touch portion is located under a lower end of the through-hole formed in the bottom surface of the hopper.

3. The juice extractor according to claim 1, wherein
the screw further comprises an upper end screw blade having a screw thread extending to an upper end of the screw body to form a horizontal blade, and
an upper end of the touch portion is located above the upper end screw blade.

4. The juice extractor according to claim 1, wherein
an inclined surface facing toward the through-hole in a radial direction is formed on an outer bottom surface of the hopper, and
an inclined surface corresponding to the inclined surface is formed on an inner surface of an upper end part of the touch portion.

5. The juice extractor according to claim 1, wherein an upper end surface of the touching portion is located in a center of the through-hole in a radial direction.

6. The juice extractor according to claim 1, wherein the touch portion is formed in plural.

7. A screw for juice extractors, wherein the screw comprises a touch portion protruding upward above a screw body, the touch portion being configured to touch a juice extraction ingredient caught in an inlet configured to allow the juice extraction ingredient to be introduced therethrough above the screw.
